# EUROPEAN PATENT APPLICATION

(11) **EP 1 134 915 A2**
(43) Date of publication of application: **19.09.2001**
(21) Application number: 01106249.4
(22) Date of filing: 14.03.2001
(51) Int. Cl.: H04B 7/26

(54) **Mobile communication system with base stations receiving and transmitting data frames**

(30) Priority: 15.03.2000 JP 2000071713
(71) Applicant: NEC CORPORATION, Tokyo (JP)
(72) Inventor: Endo, Hiroya, Tokyo (JP)
(74) Representative: Glawe, Delfs, Moll & Partner

(57) **Abstract**

The communication system includes a mobile terminal(16), a plurality of base stations (11₁∼11₄), and a base station controller (12). The mobile terminal (16) transmits a transmission data frame. Each of the base stations (11₁∼11₄) receives the transmission data frame to output a reception data frame indicative of the transmission data frame. The base station controller (12) receives the plurality of reception data frames. The base station controller (12) includes a data storing unit (32), a data selecting unit (31), and a data outputting unit (33). The data storing unit (32) storing one of the plurality of reception data frames as a storage data frame. The data selecting unit (31) selects one of the storage data frame and newly arrived one of the reception data frames. The selected one is stored as the storage data frame. The outputting unit (33) outputs the storage data frame.

## Description

### Background of the Invention

### 1. Field of the Invention

The present invention relates to a mobile communication system. More particularly, the present invention relates to a mobile communication system in which each of a plurality of base stations receives a transmission data frame from a mobile terminal and transfers a reception data frame indicative of the transmission data frame and one of the reception data frames is selected is selected and transmitted to another mobile terminal.

### 2. Description of the Related Art

A cellular communication system is one of the typical mobile communication systems. In the cellular communication system, the service area is covered by a plurality of cells, each of which is provided with a base station. A mobile terminal in a cell is connected with a base station provided for the cell through a communication channel. The communication channel between the mobile terminal and the base station is multiplexed by a multiple access technique, such as a frequency division multiple access (FDMA) method, a time division multiple access (TDMA) method and a code division multiple access (CDMA.) method.

Many of the recent cellular communication systems adopt the CDMA method because of its advantages of high frequency usage efficiency, high security and flexibility of a transmission speed. In the CDMA communication system, spread codes peculiar to the users are used to carry out spectrum spreading, and the larger number of the channels in a frequency band is available than the other methods. Furthermore, the usage of the spread codes orthogonal to each other provides the high security of the data transmission.

In the CDMA communication systems, a mobile terminal may be connected to a plurality of base stations. The mobile terminal tends to be connected to the plurality of base stations especially when the mobile terminal is located near a boundary of the cells.

Communications from the mobile terminal connected to the plurality of base stations are carried out through a base station controller. Each of the plurality of base stations receives the communication data from the mobile terminal and send them to the base station controller. The base station controller selects one of the communication data from the base station based on the communication qualities of the links between the mobile terminal and each of the base station. The selected communication data is outputted to a exchange and then transmitted to another mobile terminal.

The conventional communication systems explained above are disclosed in Japanese Laid Open Patent Application (Jp-A-Heisei 10-42337, Jp-A-Heisei 10-200502, Jp-A-Heisei 11-4472, Jp-A-Heisei 11-308657, and Jp-A-Heisei 11-308662).

In the conventional communication systems, the base station controller requires a considerably large memory capacity for buffering the communication data from the base stations. Variation of transmission times from the mobile terminal to each of the plurality of base stations is induced because of the geographic condition of the mobile terminal and the base stations. The variation is also induced by using an asynchronous transfer mode (ATM) technique because of the fluctuation originated from the technique. The base station controller carries out the selection of the communication data at a timing determined by the maximum transmission time. In the conventional communication systems, the base station controller stores all of the communication data from the base stations till the selection is executed.

The increase of the number of mobile terminals accommodated in a base station further enlarges the memory capacity. In addition, the larger capacity of the memory increases the process time needed for the selection of the communication data. This results in a problem of a drop in the processing ability.

### Summary of the Invention

Therefore, an object of the present invention is to provide a communication system for minimizing a memory capacity necessary for the selection of the communication data by the base station controller.

In order to achieve an aspect of the present invention, a mobile communication system is composed of a mobile terminal, a plurality of base stations, and a base station controller. The mobile terminal transmits a transmission data frame. Each of the plurality of base stations receives the transmission data frame to output a reception data frame indicative of the transmission data frame. The base station controller receives the plurality of reception data frames. The base station controller includes a data storing unit, a data selecting unit, and a data outputting unit. The data storing unit stores one of the plurality of reception data frames as a storage data frame. The plurality of reception data frames include a first reception data frame which is first received by the base station controller, and a second reception data frame which is second received by the base station controller. The first reception data frame is stored as the storage data frame when the first reception data frame is received by the base station controller. The data selecting unit selects one of the first and second reception data frame as a selection data frame after the second reception data frame is received by the base station controller. The data storing unit stores the selection data frame as the storage data frame after the selection data frame is selected. The outputting unit outputs the storage data frame after the storing unit stores the selection data frame.

The plurality of base stations include a first base station outputting the first reception data frame, and a second base station outputting the second reception data frame. In this case, the selecting unit desirably selects the selection data frame based on communication qualities of a first link between the mobile terminal and the first base station and a second link between the mobile terminal and the second base station.

The communication qualities may include a first result of cyclic redundancy checking on the transmission data frame transmitted through the first link, and a second result of cyclic redundancy checking on the transmission data frame transmitted through the second link.

The communication qualities may include a first electric field intensity of a first electric wave of the first link, and a second electric field intensity of a second electric wave of the second link.

The plurality of reception data frames may further include a third reception data frame which is thirdly received by the base station controller. In this case, the data selecting unit desirably selects one of the storage data frame and the third reception data frame as another selection data frame. Also, the storing unit desirably stores the other selection data frame as the storage data frame after the other selection data frame is selected. Furthermore, the outputting unit desirably outputs the storage data frame after the storing unit stores the other selection data frame.

### Brief Description of the Drawings

Fig. 1 is a configuration view showing a schematic configuration of a mobile communication system according to the embodiments;
Fig. 2 is an explanation view showing a configuration of a reception data frame 20 received by a base station controller 12;
Fig. 3 is a block diagram showing a configuration of a base station controller;
Fig. 4 is a block diagram showing a function block of a selecting unit 31;
Fig. 5 shows connection ID memory 43;
Fig. 6 is a configuration of a reception data buffer 32;
Fig. 7 is a flowchart showing a selection process of a selecting unit 31;
Fig. 8 is a flowchart showing a comparing process of a selecting unit 31; and

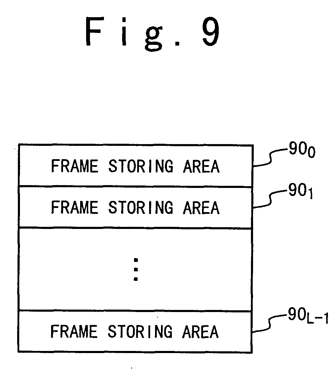

Fig. 9 is a buffer configuration of a reception data buffer 32 in other embodiments.

### Description of the Preferred Embodiments

The present invention will be described below in detail with reference to the attached drawings.

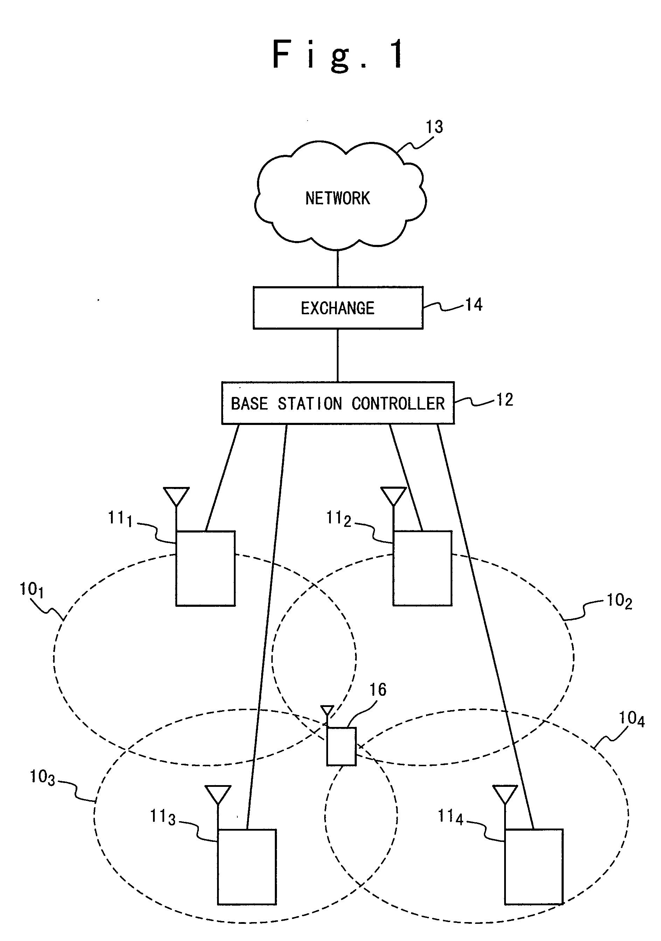

Fig. 1 shows a schematic configuration of a CDMA mobile communication system according to the present embodiments.

The CDMA mobile communication is provided with base stations 11₁ to 11₄. The base stations 11₁ to 11₄ respectively manages cells 10₁ to 10₄. The cells 10₁ to 10₄ are located so as to cover a service area of the communication system. Here, it should be noted that the number of the base stations 11₁ to 11₄ may be other than four.
the base stations 11₁ to 11₄ is supervised by a base station controller 12. The base station controller 12 is connected to an exchange 14. The exchange 14 is connected to the network 13.

The base stations 11₁ to 11₄ respectively carries out communications with a mobile terminal(s) located in the cells 10₁ to 10₄. If a mobile terminal 16 is located in the vicinity of a boundary of the cells 10₁ to 10₄ as shown in Fig. 1, two or more of the base stations 11₁ to 11₄ may be connected to the mobile terminal 16. In the present embodiment, it is assumed that the mobile terminal 16 is connected to each of the base stations 11₁ to 11₄. The mobile terminal 16 sends transmission data frames to each of the base stations 11₁ to 11₄.

Each of the connected base stations 11₁ to 11₄ receives the data frames and outputs reception data frames 20 indicative of the transmission data frames sent by the mobile terminal 16. Here, the reception data frames 20 are generated for a single transmission data frame by each of the base stations 11₁ to 11₄. The base station controller 12 receives the reception data frames 20 from the base stations 11₁ to 11₄.

The base station controller 12 does not transmit all the reception data frames 20. The base station controller 12 selects selected reception data frames, each of which is selected from the reception data frames 20 for the single transmission data frame. The selection is performed based on the communication qualities between the mobile terminal 16 and each of the base stations 11₁ to 11₅. The base station controller 12 transmits the selected reception data frames to the exchange 14. The exchange 14 transmits the selected reception data frames to another mobile terminal through the network 13.

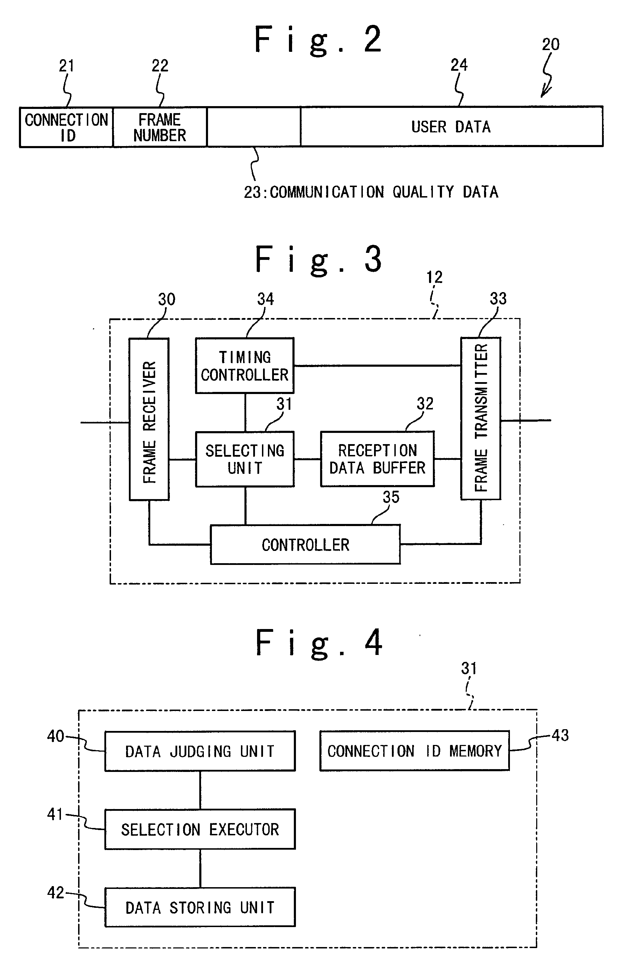

Fig. 2 shows the configuration of the reception data frames 20 received by the base station controller 12. Each of the reception data frames 20 is composed of a connection ID 21, a frame number 22, a communication quality data 23 and a user data 24.

The connection ID data 21 identifies one of the mobile stations that establishes a link(s) with any of the base stations 11₁ to 11₄. Each of the mobile stations that establishes a link(s) is given a different connection ID by the base station controller 12. The connection ID data 21 indicates the connection ID of the mobile station. In the present embodiments, the mobile station 16 is given a peculiar connection ID, and the connection ID data 21 of the reception data frames 20 indicative of the transmission data frames sent by the mobile station 16 accommodates the peculiar connection ID.

The frame number data 22 identifies transmission data frames sent by a mobile terminal. Each of the transmission data frames sent by the mobile terminal is given a different frame number by the mobile station. The frame number data 22 accommodates the frame number.

The communication quality data 23 is composed of various information indicating communication qualities of the links between the mobile station 16 and the base stations 11₁ to 11₄. Each of the base station 11₁ to 11₄ executes a CRC (Cyclic Redundancy Check) on the transmission data frame sent by the mobile station 16. Also, the each of the base station 11₁ to 11₄ determines the an electric field intensity of the electric wave of the link connecting the mobile station 16 to itself. Furthermore, each of the base station 11₁ to 11₄ measures a bit error rate of the transmission data frame from the mobile station 16. The communication quality data 23 indicates the result of CRC, the determined field intensity, and the measured bit error rate.

The user data 24 is significant data that the user intends to send. The user data 24 is transmitted through the base station controller 12, the exchange 14 to another mobile terminal.

Fig. 3 shows the base station controller 12, which receives the above-mentioned reception data frames 20. The base station controller 12 is provided with a frame receiver 30, a selecting unit 31, a reception data buffer 32, a frame transmitter 33, a timing controller 34 and a controller 35.

The frame receiver 30 receives the reception data frames 20 and sends them to the selecting unit 31. The selecting unit 31 selects ones of the reception data frames 20 to be stored. The reception data buffer 32 stores selected ones of the reception data frames 20.

At this time, the selecting unit 31 refers to each of the reception data frames 20, and judges whether or not another reception data frame indicative of the same transmission data frame is stored in the reception data buffer 32. If it is judged to be stored, the selecting unit 31 compares the communication qualities indicated by communication quality data 23 of the reception data frames to select one having the better quality.

The frame transmitter 33 fetches one of the reception data frames stored in the reception data buffer 32 at a transmission timing directed by the timing controller 34, and sends the fetched reception data frame to the exchange 14. At this time, The frame transmitter 33 fetches the reception data frame having the frame number reported by the timing controller 34 referring to the frame number data 22. If the reception data frame having the reported frame number is not accumulated in the reception data buffer 32, the reception data frame is not transmitted by the frame transmitter 33.

The timing controller 34 sends to the selecting unit 31 a timing signal indicative of the timings of the selection. Also, the timing controller 34 sends timing signal indicative of the timings of the transmission. Furthermore, the timing controller 34 sends to the frame transmitter 33 the frame number indicative of the reception data frame to be transmitted. The frame number is incremented and updated for each of the transmission timings.

The controller 35 includes a CPU (not shown) and a memory storing a program. The controller 35 controls the respective members in the base station controller 12 in accordance with the program and executes the above-mentioned series of processes.

In the base station controller 12 having the above-mentioned configuration, the selecting unit 31 performs the selection on the reception data frame received by the frame receiver 30, in accordance with the standard timing signal sent by the timing controller 34. As the result of the selection done by the selecting unit 31, only the selected reception data frames are stored in the reception data buffer 32. The reception data frames stored in the reception data buffer 32 are fetched by the frame transmitter 33, in accordance with the transmission timing signal from the timing controller 34, and sent to the exchange 14.

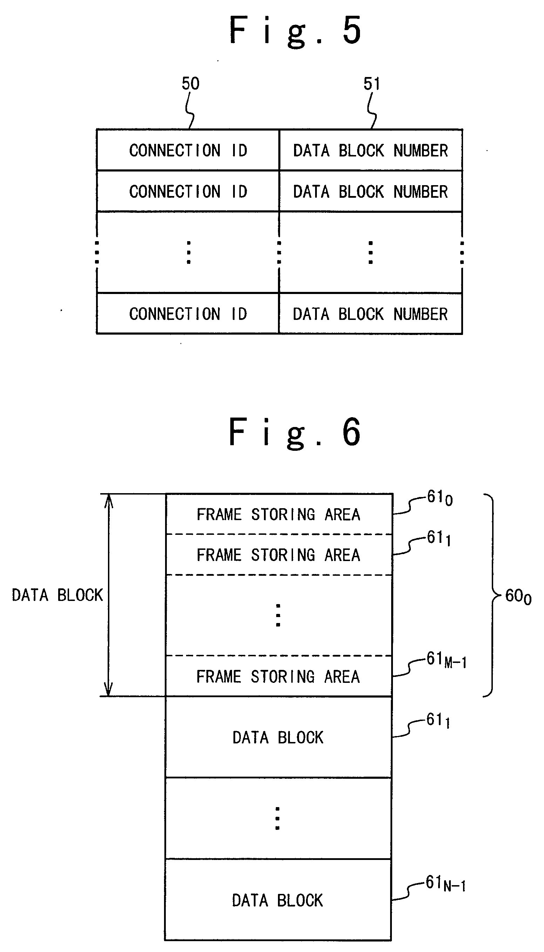

Fig. 4 shows the selecting unit 31. The selecting unit 31 is composed of a data judging device 40, a selection executor 41, a data storing device 42, and a connection ID memory 43.

The data judging device 40 judges whether or not a reception data frame from another base station communicating with the same mobile terminal is accumulated in the reception data buffer 32.

The selection executor 41 performs the selection on the reception data frames received from the frame receiver 30 when the data judging device 40 judges that the reception data frame is already accumulated in the reception data buffer 32.

The data storing device 42 stores only the reception data frames selected by the selection executor 41 in the reception data buffer 32.

The connection ID memory 43 includes connection ID areas 51 and block number areas 52 as shown in Fig. 5. Each of the connection ID areas 51 stores one of the connection ID's given to the mobile stations. Each of the block number areas 52 stores a data block number indicating where the reception data frame accommodating the connection ID is stored within the reception data buffer 32. The reception data buffer 32 is divided into a plurality of data blocks. The data block number stored in the block number area 52 indicates one of the data blocks.

Fig. 6 shows the configuration of the reception data buffer 32. The reception data buffer 32 is divided into a plurality of data blocks 60₀ to 60_{N-1}. Each of the data blocks 60₀ to 60_{N-1} is assigned to a mobile terminal. Here, N is the number of the mobile terminals that are accommodated by the base station controller 12.

Each of the data blocks 60₀ to 60_{N-1} is further divided into frame store areas 61₀ to 61_{M-1}. Each of the frame store area 61₀ to 61_{M-1} stores therein one of the reception data frames. The reception data frames respectively stored in the frame store area 61₀ to 61_{M-1} have different frame numbers. That is, the reception data frames respectively stored in the frame store area 61₀ to 61_{M-1} are indicative of different transmission data frames sent by a mobile station. The number M is determined so as to absorb the transmission time variation between each of the base stations 11₁ to 11₄ and the base station controller 12.

Next, the operating process of the CDMA communication system will be described below. First, links are established between the mobile terminal 16 and each of the base stations 11₁ to 11₄. The mobile terminal 16 is given a connection ID and the connection ID is stored in the connection ID memory 43. In addition, one of the data blocks 60₀ to 60_{M-1} is assigned to the mobile terminal 16.

The mobile terminal 16 sends a transmission data frame to each of the base stations 11₁ to 11₄. Each of the base stations sends the reception data frame 20 indicative of the transmission data frame. The plurality of the reception data frames 20 are transmitted to the base station controller 12.

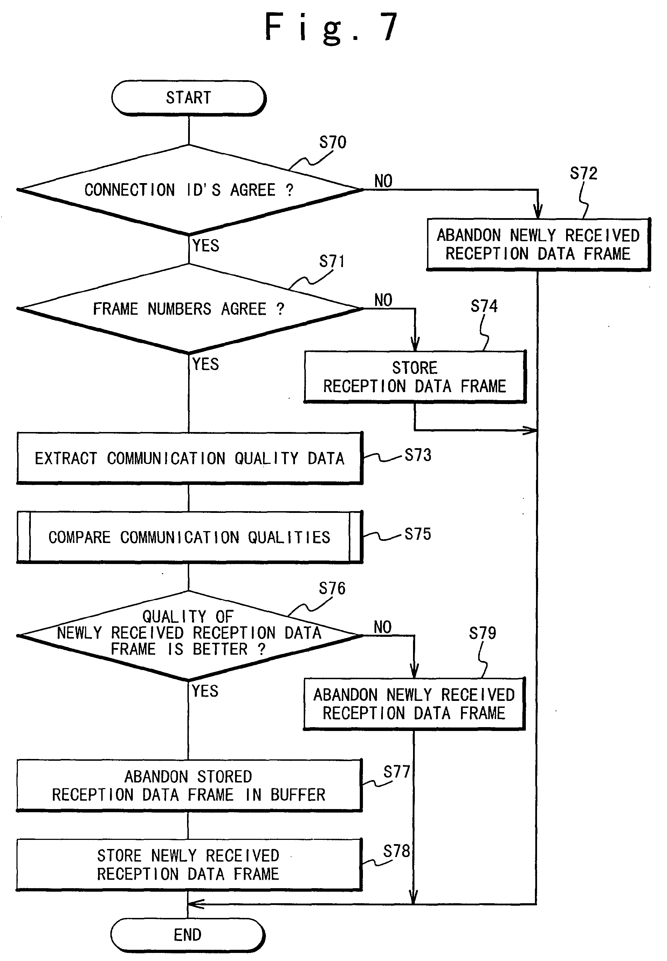

Fig. 7 shows the operation process of the base station controller 12. The selecting unit 31 included in the base station controller 12 receives first one of the reception data frames 20 from the frame receiver 30. The selecting unit 31 firstly extracts the connection ID indicated in the first reception data frame 20. Then the selecting unit 31 judges whether or not it agrees with the connection ID stored in the connection ID memory 43 (Step S70). If it does not agrees, the reception data frame is discarded (Step S72), and the series of processes is ended.

When it is judged that the connection ID is stored in the connection ID memory 43, it is further judged whether or not another reception data frame having the same frame number as the first reception data frame is stored in the reception data buffer 32 (Step S71). The judgement is executed based on the frame number held in the first received reception data frame and the frame number of the reception data frame stored in the reception data buffer 32. If the reception data frame having the same frame number is not stored in the reception data buffer 32, the received reception data frame is stored in the assigned data block of the reception data buffer 32 corresponding to the data block number stored in the connection ID memory 43 (Step S74). Then, the series of processes is ended. As for the first reception data frame, no reception data frame having the same frame number is stored in the reception data buffer 32, and the first reception data frame is stored in the reception data buffer 32.

Then, the selecting unit 31 receives second one of the reception data frames 20 from the frame receiver 30. The judgments of the connection ID and the frame number are executed in the same way (Steps S70 and S71). In this case, it is judged that the reception data frame having the same frame number as the second received reception data frame is stored in the reception data buffer 32.

In this case, the communication quality data 23 of the second received reception data frame is extracted. In addition, the communication quality data 23 of the reception data frame stored in the reception data buffer 32 is also extracted (Step S73).

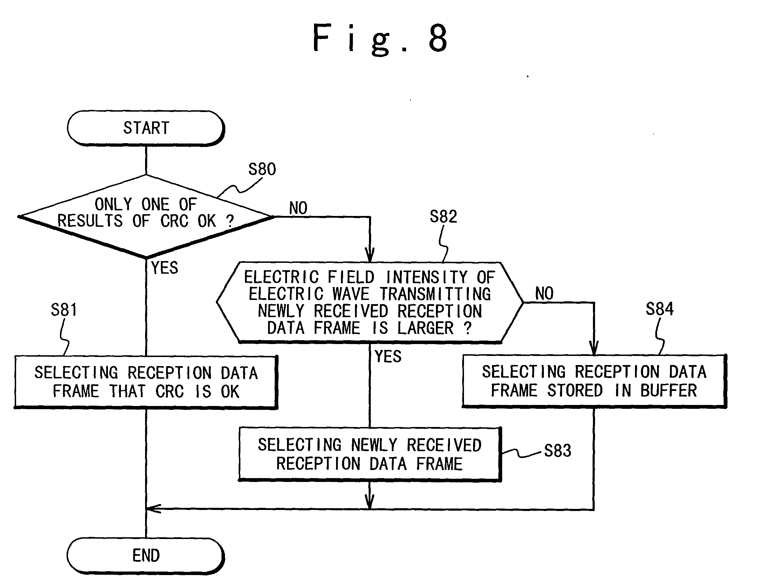

Then, the communication quality data 23 of the second received reception data frame and the stored reception data frame in the reception data buffer 32 are compared (Step S74). Fig. 8 shows the comparing process. As mentioned above, the communication quality data 23 is composed of the CRC result and the reception electric wave strength with respect to the communication from the mobile terminal 16 to one of the base station 11₁ to 11₄.

At first, the CRC results of the communication quality data 23 extracted from the second received reception data frame and the stored reception data frame are checked (Step S80). If only one of the CRC results of is judged to be at "OK", one of the reception data frames whose CRC result is OK is selected. (Step S81). Then, the series of comparing processes is ended.

On the other hand, if it is judged that both of the CRC results are same, the field intensities of the reception electric waves, which are indicated in the communication quality data 23 of both the reception data frames, are compared with each other (Step S82).

If the field intensity of the electric wave transmitting the second received reception data frame is stronger, the second received reception data frame is selected (Step S83), and the series of comparing processes is ended.

On the contrary, if the field intensity of the electric wave transmitting the second received reception data frame is weaker, the stored reception data frame already in the reception data buffer 32 is selected (Step S84), and the series of comparing processes is ended.

Here, the bit error rates included in the communication quality data 23 can be used instead of the field intensities of the electric waves.

Then, the selected reception data frame having better communication quality is newly stored in the reception data buffer 32.

If the quality of the second received reception data frame is better than that of the stored reception data frame, the stored reception data frame is discarded (Step S77). In succession, the second received reception data frame selected is stored in the reception data buffer 32 (Step S78). Then, the series of processes is ended.

If the quality of the second received data frame is poorer, the second received reception data frame is discarded (Step S79), and the series of processes is ended.

When the selecting unit 31 receives remaining one of the reception data frames 20 from the frame receiver 30, the quality comparison and the selection is executed in the same way. One of the remaining reception data frame and the stored reception data is selected based on the communication qualities of them and the selected one is outputted to the exchange 14. Therefore, the reception data frame having the best communication quality of the reception data frames 20 is always stored in the reception data buffer 32 and outputted to the exchange 14.

In the above-mentioned CDMA mobile communication system, only the reception data frame having the best communication quality is buffered in the reception data buffer 32. Thus, the memory capacity necessary for storing the reception data frame is reduced.

In the above-mentioned CDMA mobile communication system, the reception data buffer 32 may be constituted by only a data block divided into frame store areas 90₀ to 90_{L-1}. Each of the frame store areas 90₀ to 90_{L-1} stores one of the reception data frames.

In this case, the selecting unit 32 manages the usage of the frame store areas 90₀ to 90_{L-1}. Then, the selecting unit 32 refers to the frame numbers of the reception data frames from the base stations communicating with the same mobile terminal, and stores a firstly received reception data frame in a non-used frame store area. The stored result is reflected in the usage of the frame store areas 90₀ to 90_{L-1}.

Accordingly, upon receipt of a reception data frame having a certain connection ID, if a reception data frame having the same frame number from another base station communicating with the same mobile terminal is already stored in a certain frame area, the selection is performed on the newly received reception data frame and the reception data frame having the certain connection ID. The data frame having the better quality is stored in its frame store area.

In this case, the mobile communication system can use the reception data buffer further effectively and jointly improve the processing ability and reduce the cost of the system.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

## Claims

1. A mobile communication system comprising:
a mobile terminal (16) transmitting a transmission data frame;
a plurality of base stations (11₁∼11₄) each of which receives said transmission data frame to output a reception data frame indicative of said transmission data frame;
a base station controller (12) receiving said plurality of reception data frames, and including:
a data storing unit (32) storing one of said plurality of reception data frames as a storage data frame,
a data selecting unit (31), and
a data outputting unit (33), wherein said plurality of reception data frames include:
a first reception data frame which is first received by said base station controller (12), and
a second reception data frame which is second received by said base station controller (12), and
wherein said first reception data frame is stored as said storage data frame when said first reception data frame is received by said base station controller (12), and
wherein said data selecting unit (31) selects one of said first and second reception data frame as a selection data frame after said second reception data frame is received by said base station controller (12), and
wherein said data storing unit (32) stores said selection data frame as said storage data frame after said selection data frame is selected, and
wherein said outputting unit (33) outputs said storage data frame after said storing unit (32) stores said selection data frame.

2. A mobile communication system according to claim 1, wherein said plurality of base stations (11₁∼11₄) includes:
a first base station outputting said first reception data frame, and
a second base station outputting said second reception data frame, and
wherein said selecting unit (31) selects said selection data frame based on communication qualities of a first link between said mobile terminal (16) and said first base station and a second link between said mobile terminal (16) and said second base station.

3. A mobile communication system according to claim 2, wherein said communication qualities include:
a first result of cyclic redundancy checking on said transmission data frame transmitted through said first link, and
a second result of cyclic redundancy checking on said transmission data frame transmitted through said second link.

4. A mobile communication system according to claim 2, wherein said communication qualities include:
a first electric field intensity of a first electric wave of said first link, and
a second electric field intensity of a second electric wave of said second link.

5. A mobile communication system according to claim 1, wherein said plurality of reception data frames further include a third reception data frame which is thirdly received by said base station controller (12) , and
wherein said data selecting unit (31) selects one of said selection data frame and said third reception data frame as another selection data frame, and
wherein said storing unit (32) stores said another selection data frame as said storage data frame after said another selection data frame is selected, and
wherein said outputting unit (33) outputs said storage data frame after said storing unit (32) stores said another selection data frame.

6. A base station controller for a mobile communication system comprising:
a data receiving unit (30) receiving a plurality of reception data frames respectively received from a plurality of base stations (11₁∼11₄), wherein each of said plurality of reception data frames indicates a transmission data frame transmitted from a mobile terminal (16) to each of said plurality of base stations (11₁∼11₄);
a data storing unit (32) storing one of said plurality of reception data frames as a storage data frame;
a data selecting unit (31); and
a data outputting unit (33), wherein said plurality of reception data frames include:
a first reception data frame which is first received by said data receiving unit (30), and
a second reception data frame which is second received by said data receiving unit (30), and
wherein said first reception data frame is stored as said storage data frame when said first reception data frame is received by said data receiving unit (30), and
wherein said data selecting unit (31) selects one of said first and second reception data frame as a selection data frame after said second reception data frame is received by said data receiving unit (30), and
wherein said data storing unit (32) stores said selection data frame as said storage data frame after said selection data frame is selected, and
wherein said outputting unit (33) outputs said storage data frame after said storing unit (32) stores said selection data frame.

7. A base station controller according to claim 6, wherein said plurality of base stations (11₁∼11₄) includes:
a first base station outputting said first reception data frame, and
a second base station outputting said second reception data frame, and
wherein said selecting unit (31) selects said selection data frame based on communication qualities of a first link between said mobile terminal (16) and said first base station and a second link between said mobile terminal (16) and said second base station.

8. A base station controller according to claim 6, wherein said communication qualities include:
a first result of cyclic redundancy checking on said transmission data frame transmitted through said first link, and
a second result of cyclic redundancy checking on said transmission data frame transmitted through said second link.

9. A base station controller according to claim 6, wherein said communication qualities include:
a first electric field intensity of a first electric wave of said first link, and
a second electric field intensity of a second electric wave of said second link.

10. A base station controller according to claim 6, wherein said plurality of reception data frames further include a third reception data frame which is thirdly received by said data receiving unit (30), and
wherein said data selecting unit selects one of said selection data frame and said third reception data frame as another selection data frame, and
wherein said storing unit (32) stores said another selection data frame as said storage data frame after said another selection data frame is selected, and
wherein said outputting unit (33) outputs said storage data frame after said storing unit (32) stores said another selection data frame.

11. An operating method of a communication system comprising:
transmitting a transmission data frame from a mobile terminal (16) to each of a plurality of base stations (11₁∼11₄);
receiving said transmission data frame by said plurality of base stations (11₁∼11₄);
outputting a plurality of reception data frames indicative of said transmission data frame respectively from said plurality of base stations (11₁∼11₄);
receiving a first reception data frame of said plurality of reception data frames;
storing said first reception data frame as a storage data frame;
receiving a second reception data frame of said plurality of reception data frames after said receiving said first reception data frame;
selecting one of said first and second reception data frame as a selection data frame after said receiving said second reception data frame;
storing said selection data frame as said storage data frame after said selecting;
outputting said storage data frame after said storing said selection data frame.

12. An operating method according to claim 11, wherein said plurality of base stations (11₁∼11₄) includes:
a first base station outputting said first reception data frame, and
a second base station outputting said second reception data frame, and
wherein said selecting includes selecting one of said first and second reception data frame based on communication qualities of a first link between said mobile terminal (16) and said first base station and a second link between said mobile terminal (16) and said second base station.

13. An operating method according to claim 11, wherein said communication qualities include:
a first result of cyclic redundancy checking on said transmission data frame transmitted through said first link, and
a second result of cyclic redundancy checking on said transmission data frame transmitted through said second link.

14. An operating method according to claim 11, wherein said communication qualities include:
a first electric field intensity of a first electric wave of said first link, and
a second electric field intensity of a second electric wave of said second link.

15. An operating method according to claim 11, further comprising:
receiving a third reception data frame of said plurality of reception data frames after said receiving said second reception data frame;
selecting one of said selection data frame and said third reception data frame as another selection data frame after said receiving said third reception data frame;
storing said another selection data frame as said storage data frame after said selecting said one of said selection data frame and said third reception data frame; and
outputting said storage data frame after said storing said another selection data frame.
